# EUROPEAN PATENT APPLICATION

(11) **EP 4 491 441 A1**
(43) Date of publication of application: **15.01.2025**
(21) Application number: 23185644.4
(22) Date of filing: 14.07.2023
(51) Int. Cl.: B60L 53/30, B60L 53/63

(54) **SYSTEM, METHOD AND CHARGING BOX FOR CHARGING ELECTRIC VEHICLES**

(71) Applicant: PhaseBox AB, 239 33 Skanör (SE)
(72) Inventor: Nordanåker, Mikael, 239 33 Skanör (SE); Nordanåker, Max, 217 55 Malmö (SE)
(74) Representative: Ström & Gulliksson AB

(57) **Abstract**

A method (800) of operating an electric vehicle charging box (40) is presented. The method (800) comprises receiving (810) a radio signal (50) by point-to-point radio communication. The method (800) then comprises verifying (820) that a digital address (ECDA) contained in the received radio signal (50) matches a digital address (CBDA) of the charging box (40). The method (800) comprises reading (830), from the received and verified radio signal (50), data indicative of measured instantaneous consumption of electrical current (ICEC) on each of three electrical phases supplying power to the charging box (40). The method (800) finally comprises using said data for power utilization (840) of alternating current from an electrical cabinet (10) to deliver current to an electric vehicle (99) connected to the charging box (40).

## Description

### TECHNICAL FIELD

The present invention generally relates to charging of electric vehicles. More specifically, the invention relates to a system for charging electric vehicles, the system comprising an electrical cabinet and an electric vehicle charging box, powered by alternating current from the electrical cabinet. The invention also relates to an electric vehicle charging box and to a method of operating an electric vehicle charging box.

### BACKGROUND

A common way of charging a rechargeable electric vehicle is by means of a charging box, powered by alternating current from an electrical cabinet. The electrical cabinet receives three-phase alternating current from a power grid and distributes alternating current to electrically powered devices in or at a building. In addition, the electrical cabinet supplies power to the charging box for the electrical vehicle.

When charging a rechargeable electric vehicle, high electric power is required, and the available power is often a limiting factor. This also applies in e.g. parking garages. For this reason, load balancing is used by contemporary charging boxes to learn continuously about the available power from a power supply, such as the electrical cabinet, as a basis for regulating the charging current for charging the electric vehicle.

For load balancing to be possible, instantaneous consumption of electrical current on each of the three phases by said electrically powered devices in or at said building will have to be measured in the electrical cabinet. Since the electrical cabinet is positioned externally to the charging box, sometimes at quite a distance, measurement data for the instantaneous consumption of electrical will have to be transmitted via a communication infrastructure to a control unit of the charging box. Today's solutions are typically based on either a WiFi infrastructure at the building or a mobile network subscription for the transmission of the measurement data from the electrical cabinet to the charging box. Both approaches have their drawbacks.

For instance, being dependent on the availability of a WiFi infrastructure is a disadvantage already at the time of installation of the charging box. The installer person will either have to be informed of the required WiFi access credentials in advance, or rely on someone representing the owner (or similar person) being present at the time of installation, in order to be able to configure the access to the WiFi infrastructure appropriately. In a long-term perspective, there is a risk of the WiFi infrastructure growing outdated and subsequently being replaced. If replaced, the original WiFi access credentials will typically cease to work, and an authorized and competent service person will have to visit the location of the electrical cabinet and the charging box to reconfigure the WiFi access.

Using a mobile network subscription for the communication of measurement data for the instantaneous consumption of electrical current has similar drawbacks both at the time of installation and in a long-term perspective. In addition, there is a recurring cost associated with the mobile network subscription that has to be borne by the owner or resident of the building or the electric vehicle.

As is clear from the above, the present inventors have identified problems and shortcomings with the prior art. In line with the observations above, the present inventors have identified both the need for and the benefits of improvements in the charging of electric vehicles, and more particularly an improved electric vehicle charging box.

### SUMMARY

It is accordingly an object of the invention to solve, eliminate, alleviate, mitigate or reduce at least some of the problems and shortcomings referred to above.

A first aspect of the present invention is a system for charging electric vehicles. The system comprises an electrical cabinet for receiving three-phase alternating current from a power grid and distributing alternating current to electrically powered devices in or at a building. The system moreover comprises an electric vehicle charging box, powered by alternating current from the electrical cabinet and constituting what is commonly referred to as an electric vehicle supply equipment, EVSE.

The electrical cabinet comprises a sensing unit for measuring instantaneous consumption of electrical current by said electrically powered devices on each of the three phases. The electrical cabinet moreover comprises a point-to-point radio communication transceiver, and a control unit operatively associated with the point-to-point radio communication transceiver and the sensing unit. The control unit of the electrical cabinet has access to a digital address of the electrical cabinet and is configured to cause the point-to-point radio communication transceiver to send a radio signal containing said digital address and data indicative of the measured instantaneous consumption of electrical current on each of the three phases.

The charging box comprises a charging power unit configured for power utilization of alternating current from the electrical cabinet to deliver current to an electric vehicle connected to the charging box. The charging box moreover comprises a point-to-point radio communication transceiver for receiving the radio signal transmitted from the electrical cabinet, and a control unit operatively associated with the point-to-point radio communication transceiver and the charging power unit. The control unit of the charging box has access to a digital address of the charging box and is configured to verify that the digital address contained in the received radio signal matches the digital address of the charging box, read the data indicative of the measured instantaneous consumption of electrical current on each of the three phases as contained in the received and verified radio signal, and provide said data to the charging power unit as input for the power utilization.

The system according to the first aspect of the present invention does not rely on the provision and continued existence of an operational external communication infrastructure for the communication of measurement data indicative of the measured instantaneous consumption of electrical current on each of the three phases in the electrical cabinet and may therefore operate autonomously even in a long-time perspective. It does not require input from an owner or resident of the building or a mobile network operator to configure access to an external communication infrastructure and is therefore beneficial already at the time of installation of the charging box. Moreover, recurring subscription costs for an external communication infrastructure is avoided with the system according to the first aspect of the present invention.

Preferred but non-exhaustive embodiments of the system according to the first aspect of the present invention are defined in the appended dependent claims and will be described further in the Detailed Description section of this document. The features of the embodiments provide additional beneficial technical effects, as will be clear to the skilled reader.

A second aspect of the present invention is an electric vehicle charging box, such as an EVSE. The electric vehicle charging box comprises a charging power unit configured for power utilization of alternating current from an electrical cabinet to deliver current to an electric vehicle connected to the charging box. The electric vehicle charging box further comprises a point-to-point radio communication transceiver for receiving a radio signal transmitted from the electrical cabinet. The electric vehicle charging box moreover comprises a control unit operatively associated with the point-to-point radio communication transceiver and the charging power unit.

The electric vehicle charging box according to the second aspect of the present invention may further have the same or equivalent features as the electric vehicle charging box in the system according to the first aspect of the present invention. The second aspect of the present invention generally contributes to solving the same problems and obtaining the same advantages as the first aspect of the present invention, or any of its embodiments.

A third aspect of the present invention is a method of operating an electric vehicle charging box, such as the one referred to for the first and second aspects of the invention. The method comprises receiving a radio signal by point-to-point radio communication. The method then comprises verifying that a digital address contained in the received radio signal matches a digital address of the charging box. The method comprises reading, from the received and verified radio signal, data indicative of measured instantaneous consumption of electrical current on each of three electrical phases supplying power to the charging box. The method finally comprises using said data for power utilization of alternating current from an electrical cabinet to deliver current to an electric vehicle connected to the charging box.

The method of operating an electric vehicle charging box according to the third aspect of the present invention may further include any of the functionality of the system according to the first aspect of the present invention, or any of its embodiments. The third aspect of the present invention generally contributes to solving the same problems and obtaining the same advantages as the first and second aspects of the present invention.

Other aspects, objectives, features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein.

All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated. Specifically, the term "point-to-point radio communication transceiver" is not to be construed to necessarily mean bidirectional communication ability. Unless a particular embodiment requires bidirectional communication ability, a point-to-point radio communication transmitter or a point-to-point radio communication receiver (as the case may be), will qualify as a "point-to-point radio communication transceiver".

### BRIEF DESCRIPTION OF DRAWINGS

Figure 1 is a block diagram illustrating a system for charging of electric vehicles generally according to the present invention, the system comprising an electrical cabinet and an electric vehicle charging box powered by alternating current from the electrical cabinet.
Figure 2 is a block diagram illustrating a system for charging of electric vehicles according to one embodiment.
Figure 3 is a block diagram illustrating a system for charging of electric vehicles according to one embodiment.
Figure 4 is a block diagram illustrating a system for charging of electric vehicles according to one embodiment.
Figure 5 is a block diagram illustrating an embodiment of the electrical cabinet in the system for charging of electric vehicles as shown in any of Figures 1 to 4.
Figure 6 is a block diagram illustrating another embodiment of the electrical cabinet in the system for charging of electric vehicles as shown in any of Figures 1 to 4.
Figure 7 is a schematic flowchart diagram illustrating power utilization by the charging box.
Figure 8 is a schematic flowchart diagram illustrating a method of operating an electric vehicle charging box generally according to the present invention.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

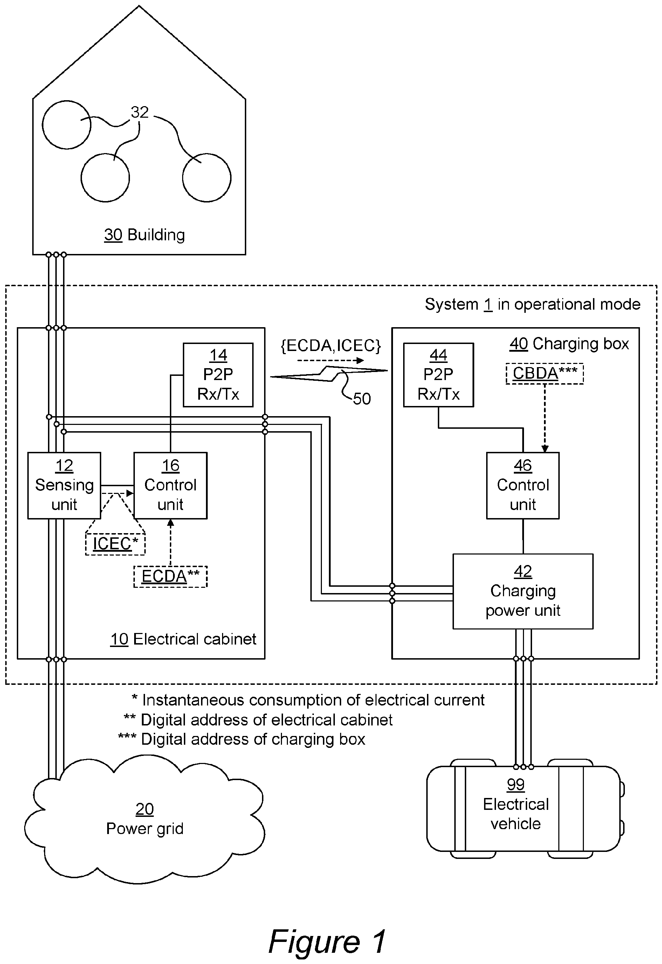

Reference is first made to Figure 1 which illustrates a system 1 for charging of electric vehicles generally according to the present invention. As can be seen in Figure 1, the system 1 comprises an electrical cabinet 10 for receiving three-phase alternating current from a power grid 20 and distributing alternating current to electrically powered devices 32 in or at a building 30. The electrically powered devices 32 may be of various different kinds, including but not limited to household appliances, heating devices, cooling devices, computer devices, media devices, lighting systems, office equipment, power tools, etc. The system 1 moreover comprises an electric vehicle charging box 40, powered by alternating current from the electrical cabinet 10.

The electrical cabinet 10 comprises a sensing unit 12 for measuring instantaneous consumption of electrical current, referred to as ICEC in the drawings, by the electrically powered devices 32 on each of the three phases of alternating current. The electrical cabinet 10 furthermore comprises a point-to-point radio communication transceiver 14, and a control unit 16 operatively associated with the point-to-point radio communication transceiver 14 and the sensing unit 12. The control unit 16 has access to a digital address (referred to as ECDA in the drawings) of the electrical cabinet 10 and is configured to cause the point-to-point radio communication transceiver 14 to send a radio signal 50 containing said digital address ECDA together with data indicative of the measured instantaneous consumption of electrical current ICEC on each of the three phases.

The charging box 40 comprises a charging power unit 42 configured for power utilization of alternating current from the electrical cabinet 10 to deliver current to an electric vehicle 99 connected to the charging box 40. The charging box 40 furthermore comprises a point-to-point radio communication transceiver 44 for receiving the radio signal 50 transmitted from the electrical cabinet 10, as well as a control unit 46 operatively associated with the point-to-point radio communication transceiver 44 and the charging power unit 42.

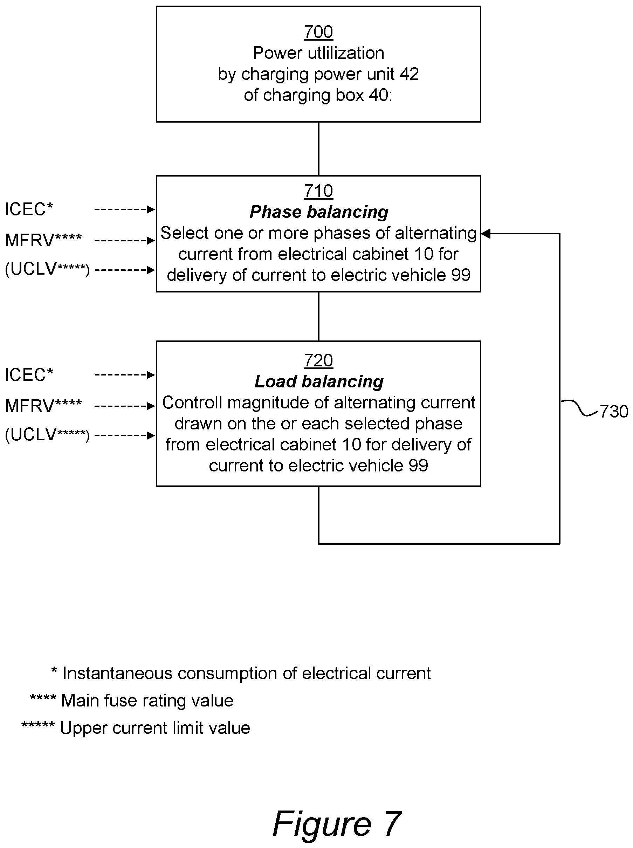

The control unit 46 of the charging box 40 has access to a digital address (referred to as CBDA in the drawings) of the charging box 40 and is configured to verify that the digital address ECDA contained in the received radio signal 50 matches (typically, is identical to) the digital address CBDA of the charging box 40. The control unit 46 then reads the data indicative of the measured instantaneous consumption of electrical current ICEC on each of the three phases as contained in the received and verified radio signal 50, and provides said data to the charging power unit 42 as input for the power utilization thereof. Particulars of the power utilization by the charging box 40 will be presented later with reference to Figure 7.

As mentioned already in the Summary section, the system 1 is beneficial since it does not rely on the provision and continued existence of an operational external communication infrastructure for the communication of measurement data indicative of the measured instantaneous consumption of electrical current ICEC) on each of the three phases in the electrical cabinet 10. Instead, the measurement data is communicated directly between the electrical cabinet 10 and the charging box 40 using the point-to-point radio communication transceiver 14 the electrical cabinet 10 and the point-to-point radio communication transceiver 44 in the charging box 40. The point-to-point radio communication transceivers 14, 44 allow communication of the radio signal 50 from the electrical cabinet 10 to the charging box 40 without requiring any intermediate local or global data communication network entities. Autonomous operation of the system 1 is therefore enabled.

The point-to-point radio communication transceivers 14, 44 may be implemented by any suitable technology, including but not limited to LoRa. As is well known as such, LoRa (Long Range) is a wireless communication technology designed for long-range and low-power applications, particularly in the context of Internet of Things (IoT) devices. It enables devices to communicate over relatively long distances while consuming minimal energy, using low-frequency bands (typically in the sub-GHz range) that can penetrate through obstacles and have a lower susceptibility to interference.

While LoRa is primarily designed for wide-area communication and is commonly used in a star-of-stars network architecture where multiple LoRa-enabled devices communicate with a central gateway, embodiments of the present invention use LoRa for point-to-point communication without requiring such network architecture. Hence, in these embodiments the point-to-point radio communication transceivers 14, 44 are two LoRa-enabled devices that are configured to operate in a peer-to-peer mode. These devices typically act as transceivers, allowing bidirectional communication between them. However, for the radio communication ability required for the system 1 as outlined in Figure 1, it suffices if the point-to-point radio communication transceiver 14 is configured as a transmitter and the point-to-point radio communication transceiver 44 is configured as a receiver, i.e. unidirectional communication ability is enough. (As will be clear from the description of the other drawings, some embodiments of the present invention require bidirectional communication ability of the point-to-point radio communication transceivers 14, 44).

As is well within reach of a skilled person, some aspects will have to be considered for a point-to-point LoRa configuration of two LoRa-enabled devices. First, it should be ensured that both devices are operating on the same frequency band and channel. LoRa devices typically support multiple frequency bands, such as 868 MHz, 915 MHz, or others, depending on region. Secondly, the LoRa devices should be configured with compatible modulation parameters, including spreading factor, bandwidth, and coding rate. These settings should be set to match on both devices to ensure successful communication. Moreover, transmission power level should be adjusted based on the desired communication range and the environmental conditions between the two devices. Of course, higher transmission power may provide better range but may also consume more energy. In addition, appropriate antennas should be chosen for the devices to optimize the signal strength and reception quality between them. The choice of antenna type and placement can significantly impact the point-to-point communication range. Then, a suitable data protocol or messaging format should be defined that both devices can understand, to ensure that the transmitted data is correctly interpreted by the receiving device. All of these considerations can be satisfied by the skilled person using common skills and knowledge.

Alternative embodiments of the present invention may be based on Bluetooth, ZigBee, or WiFi in a point-to-point configuration, without limitation.

Each of the control units 16, 46 may be implemented as a microcomputer adapted to perform the functionality and tasks described in this document. The microcomputer may include or be implemented by a processing device being a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the described functionality and tasks. The microcomputer may include one or more memories being non-volatile memories (e.g., read-only memories (ROM), erasable programmable read-only memories (EPROM), electrically erasable programmable read-only memories (EEPROM), etc.), and volatile memories (e.g., random-access memories (RAM)), or any other medium which can be used to carry or store desired program code in the form of machine-executable instructions or data structures and which can be accessed by a computer or other machine with a processing device.

The digital address ECDA of the electrical cabinet 10 and the digital address CBDA of the charging box 40 are set such that they match each other. Typically, this will mean that the digital address ECDA of the electrical cabinet 10 is identical to the digital address CBDA of the charging box 40. The digital address ECDA/CBDA may be represented by a bit pattern that renders it at least locally unique (within the operating range of the point-to-point radio communication transceivers 14, 44). Therefore, the bit-length of the digital address ECDA/CBDA may be chosen as appropriate depending on actual implementation conditions, with 4, 8, 12, 16 or 32 bits being some non-limiting examples.

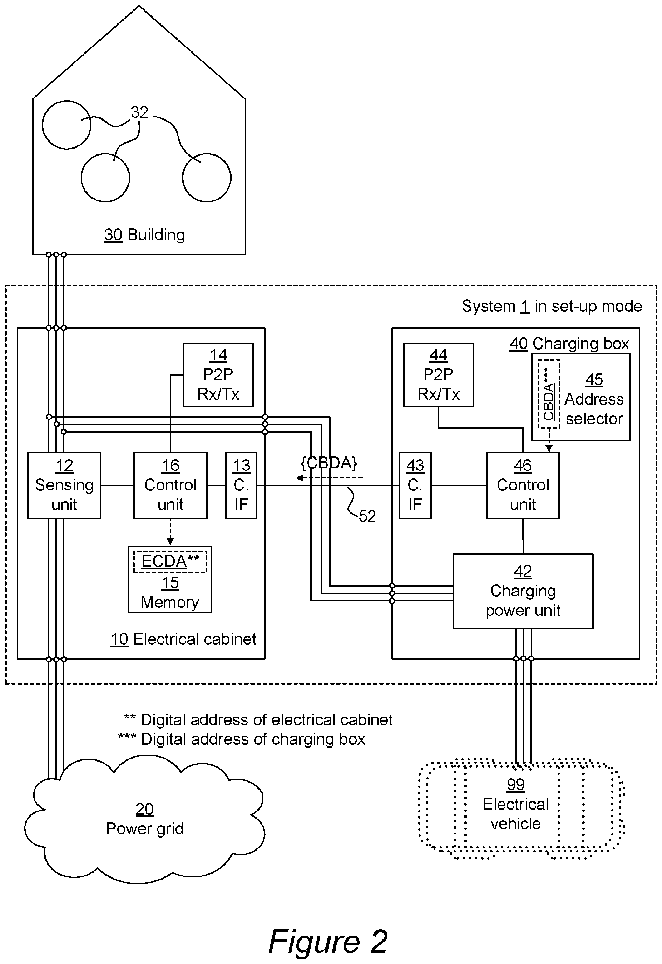

A particularly beneficial embodiment that offers convenient setting of the digital address ECDA/CBDA is presented in Figure 2, wherein the system 1 is illustrated in a state of a set-up mode rather than an operational mode for charging. The electrical cabinet 10 and the charging box 40 may be configured to enter the set-up mode during installation, setting of operational parameters, maintenance, updates, upgrades, or repair, for instance.

In this embodiment of the system 1, each of the electrical cabinet 10 and the charging box 40 comprises a communication interface 13, 43. The communication interfaces 13, 43 may comprise respective communication ports for wired communication, such as, for instance, serial communication pursuant to RS-232 (Recommended Standard 232), UART (Universal Asynchronous Receiver-Transmitter), I2C (Inter-Integrated Circuit), SPI (Serial Peripheral Interface), or USB (Universal Serial Bus).

Each of the electrical cabinet 10 and the charging box 40 has a set-up mode in which the communication interfaces 13, 43 are connected to each other, as seen at 52. The control unit 46 of the charging box 40 is configured, in the set-up mode, to notify the digital address CBDA of the charging box 40 through the communication interface 43. The control unit 16 of the electrical cabinet 10 is configured, in the set-up mode, to receive the digital address CBDA of the charging box, as notified by the control unit 46 of the charging box 40, through the communication interface 13 and store the received digital address CBDA as the digital address ECDA of the electrical cabinet 10 in a memory 15 of the control unit 16. The memory 15 may, for instance, be implemented by an internal register in the control unit 14, as an on-chip memory or as a separate memory, such as an electrically erasable programmable read-only memory (EEPROM, flash memory).

Advantageously, as seen in Figure 2, the charging box 40 comprises an address selector 45 for setting the digital address CBDA of the charging box 40, wherein the control unit 46 of the charging box 40 is configured, in the set-up mode, to read the digital address CBDA of the charging box 40 from the address selector 45 for notification through the communication interface 43.

The address selector 45 may be a group of dip switches representing n bits of information. The dip switches may be factory pre-set to any given n-bit value (n for instance being 4, 8, 12, 16 or 32) to represent the digital address of the charging box 40. Alternatively or additionally, an installer person may set or change the positions of the group of dip switches during the set-up mode to represent a desired n-bit digital address of the charging box 40. In another embodiment, the address selector is implemented by an electronic memory, such as an EEPROM memory or a flash memory, the contents of which may be written to or updated at a production stage or during the set-up mode.

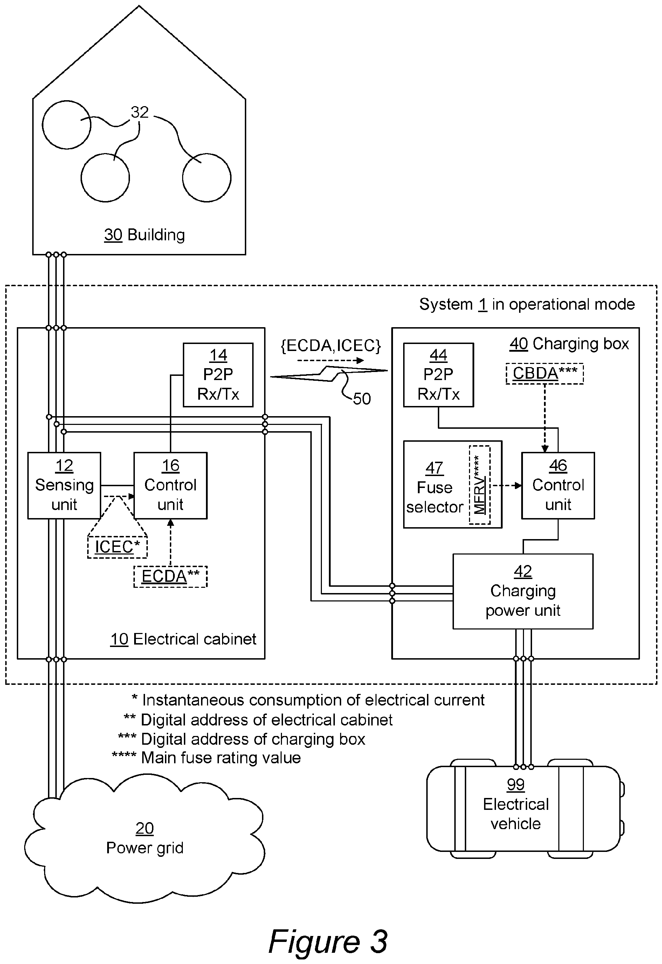

Another particularly beneficial embodiment is presented in Figure 3, offering convenient setting of a main fuse rating value, MFRV, that applies to the building 30 to which the electrical cabinet 10 belongs, for use by the charging box 40. To this end, the charging box 40 comprises a main fuse rating selector 47 for setting the main fuse rating value MFRV. The control unit 46 of the charging box 40 is configured to use the main fuse rating value MFRV as set on the main fuse rating selector 47 as a parameter for the power utilization. The main fuse rating value MFRV is typically set by an installer person during installation of the charging box 40 and will allow the charging box 40 to operate autonomously by having local access to this information.

The main fuse rating selector 47 may, for instance, comprise a rotary switch or dial being rotatable into any of a plurality of different positions, each position representing a respective main fuse rating value. As an alternative, the main fuse rating selector 47 may comprise a group of dip switches, each being switchable between first and second positions, wherein the positions set for the group of dip switches in combination will represent a selected main fuse rating value MFRV among at least two different main fuse rating values.

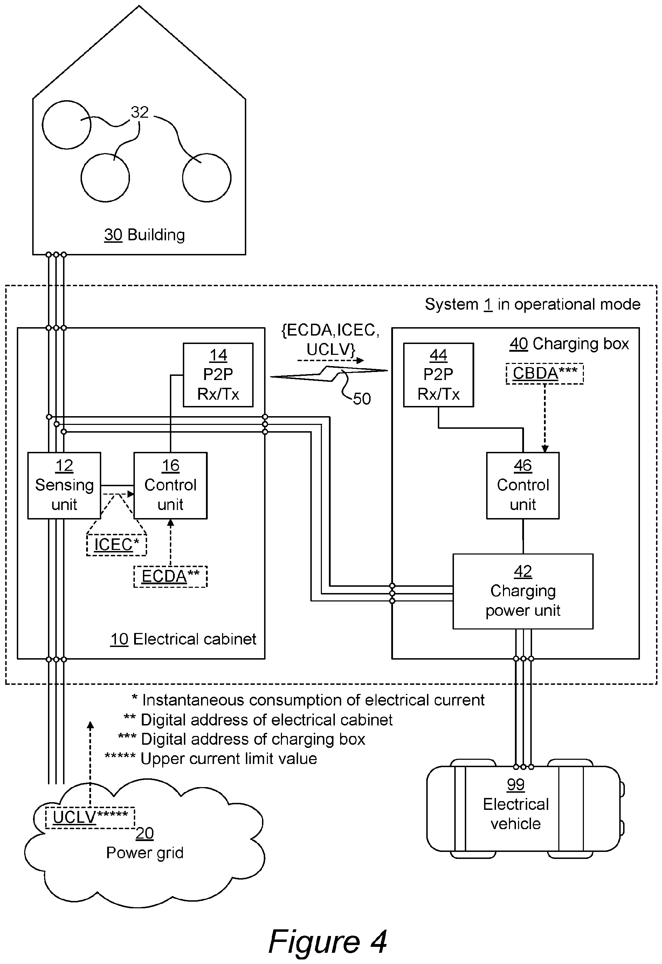

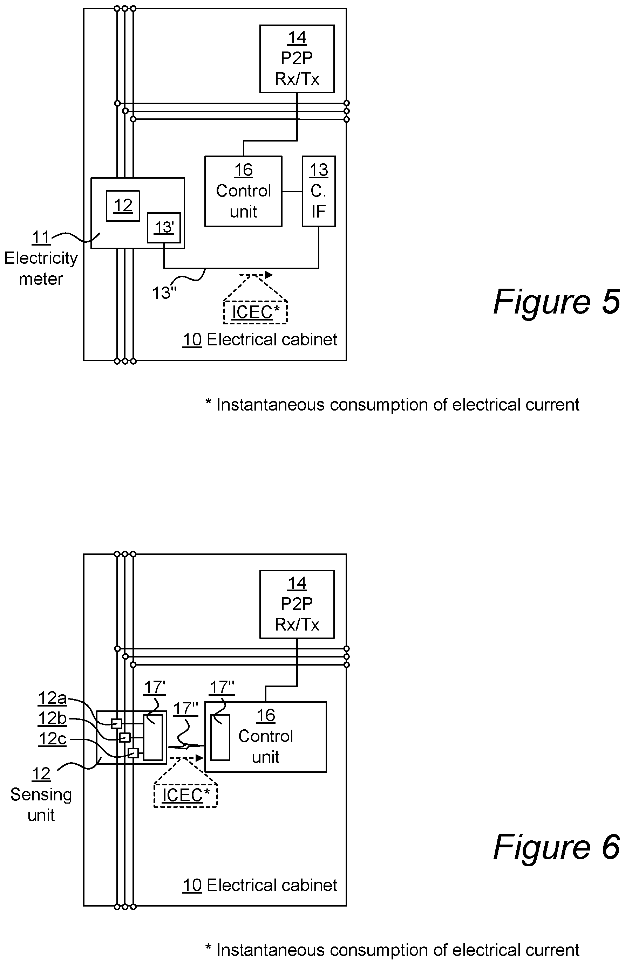

Leaving Figure 4 aside for the moment (to be discussed further below), reference is now made to Figures 5 and 6 which illustrate two embodiments of the electrical cabinet 10 in the system 1 for charging of electric vehicles as shown in any of Figures 1 to 4. More specifically, Figures 5 and 6 illustrate two different exemplifying implementations of the sensing unit 12 in the electrical cabinet 10.

Starting with Figure 5, the electrical cabinet 10 has an electricity meter 11 for measuring current consumption on the three different phases and reporting the total current consumption to a network operator of the power grid 20, for use in a conventional manner *per se* to regularly debit the electricity subscriber (e.g. owner or resident of the building 30) for the power consumption. In this embodiment, the sensing unit 12 is simply implemented as a part of the electricity meter 11, being connected to the control unit 16 of the electrical cabinet 10 via a first type of communication link 13, 13', 13". Note that the communication interface 13 as referred to for the embodiment in Figure 2 in the set-up mode of the system 1 may beneficially be used also to form the communication link to the electricity meter 11 in the operational mode of the system 1 according to Figure 5.

In the alternative embodiment of Figure 6, the electrical cabinet 10 may or may not have an electricity meter but in any event has a separate current measuring arrangement including a respective current meter 12a, 12b, 12c for each of the three phases of alternating current in the electrical cabinet 10. The separate current measuring arrangement is connected to the control unit 16 of the electrical cabinet 10 via a second type of communication link 17, 17', 17".

The first type of communication link 13, 13', 13" (Figure 5) may, for instance, be a wireless communication link or, alternatively, a wired (e.g. serial) communication link. The second type of communication link 17, 17', 17" (Figure 6) may, for instance, be a wired (e.g. serial) communication link or, alternatively, a wireless communication link.

In one embodiment, the charging box 40 sends a control radio signal to the electrical cabinet 10 about which sensing unit 12 is used (i.e., the Figure 5 alternative or the Figure 6 alternative). In this embodiment, the point-to-point radio communication transceivers 14, 44 in the electrical cabinet 10 and the charging box 40 are both being capable of bidirectional radio communication as a mandatory requirement. The control unit 46 of the charging box 40 is configured to cause the point-to-point radio communication transceiver 44 of the charging box 40 to send a control signal comprising information indicating whether the sensing unit 12 of the electrical cabinet 10 is alternative a) (Figure 5) or alternative b) (Figure 6). The control unit 16 of the electrical cabinet 10 is configured to use the information indicated in the control signal, as received by the point-to-point radio communication transceiver 14 of the electrical cabinet 10, to retrieve the measured instantaneous consumption of electrical current ICEC on each of the three phases via the first type of communication link 13, 13', 13" according to alternative a) or the second type of communication link 17, 17', 17" according to alternative b), as applicable. This is advantageous in terms of installer convenience and operational autonomy.

Power utilization 700 by the charging power unit 42 of the charging box 40 will now be described, in an exemplifying and non-limiting sense, with reference to Figure 7 and also Figure 4.

As seen at 710 in Figure 7, the power utilization 700 by the charging power unit 42 of the charging box 40 involves *phase balancing* by selecting one or more phases of alternating current from the electrical cabinet 10 for the delivery of current to the electric vehicle 99. To this end, the charging power unit 42 may comprise a controllable relay switching matrix. Advantageously, said one or more phases is/are selected as the particular one(s) of the phases of alternating current from the electrical cabinet 10 which is/are indicated by said data indicative of the measured instantaneous consumption of electrical current ICEC as being subject to the lowest measured instantaneous consumption of electrical current. In applicable embodiments, in addition to the ICEC values for each of the three phases, the main fuse rating value MFRV as described above for Figure 3 is used to assist in the selection of one or more of the available phases.

The power utilization 700 by the charging power unit 42 of the charging box 40 further involves *load balancing* by controlling a magnitude of alternating current drawn on the or each selected phase from the electrical cabinet 10 for the delivery of current to the electric vehicle 99. See 720 in Figure 7. The load balancing advantageously involves controlling the magnitude of alternating current drawn on the or each selected phase from the electrical cabinet 10 based on the measured instantaneous consumption of electrical current ICEC on each of the phases, as indicated by said data, and an upper current limit value UCLV. In some embodiments, the upper current limit value UCLV is simply equal to or depends on the main fuse rating value MFRV (cf. Figure 3).

In other, more refined embodiments, the upper current limit value UCLV is provided from the electrical cabinet 10 and is included in the radio signal 50 or is communicated to the charging box 40 in a previous radio signal. Advantageously, the upper current limit value UCLV may be provided by the power grid 20 to the electrical cabinet 10. This approach is illustrated in Figure 4 and enables the network operator of the power grid 20 to exercise efficient load balancing on a macro scale for all charging boxes 10 being supplied with power from the power grid 20. Note that the upper current limit value UCLV as set by the network operator of the power grid 20 may very well, from time to time, be lower than the main fuse rating value MFRV of the individual electrical cabinet 10.

As seen at 730 in Figure 7, one beneficial feature is that the charging power unit 42 of the charging box 40 may be configured to repeat the phase balancing step 710 when appropriate. By continuously monitoring the measured instantaneous consumption of electrical current ICEC on each of the phases during the load balancing step 720, the charging power unit 42 may conclude that the originally selected phase(s) in the phase balancing step 710 might no longer be optimal, and make a new selection of one or more phases in the phase balancing step 710. This further improves on power utilization.

Generally, as can be understood from the description of Figure 7, the charging box 40 is configured to exercise power utilization by phase balancing and/or load balancing by adjusting the distribution of electric power drawn from the different phases of the alternating current from the electrical cabinet 10 to maintain a balanced and efficient utilization of the available electrical capacity for the electrically powered devices 32 in the building 30 as well as the electric vehicle 99.

In some advanced embodiments, the system 1 comprises a plurality of charging boxes, each being embodied as the charging box 10 as described above. At least two of the plurality of charging boxes have the same digital address CBDA. This enables these at least two charging boxes to utilize the data contained in the radio signal 50 transmitted by the electrical cabinet 10 for common power utilization of the alternating current from the electrical cabinet 10. Clearly, this represents an improvement in power utilization.

The charging box 40 in any of the embodiments described above may typically be what is commonly referred to as an electric vehicle supply equipment, EVSE.

The features of the embodiments in Figures 2, 3 and 4 can be combined; they are not in any way to be understood as being mutually exclusive.

For the avoidance of any doubt, one aspect of the invention as described in this document is an electric vehicle charging box 40, such as an EVSE. The electric vehicle charging box 40 comprises a charging power unit 42 configured for power utilization of alternating current from an electrical cabinet 10 to deliver current to an electric vehicle connected to the charging box. The electric vehicle charging box 40 further comprises a point-to-point radio communication transceiver 44 for receiving a radio signal 50 transmitted from the electrical cabinet 10. The electric vehicle charging box 40 moreover comprises a control unit 46 operatively associated with the point-to-point radio communication transceiver 44 and the charging power unit 42.

The control unit 46 has access to a digital address CBDA of the charging box 40. The control unit 46 is configured to verify that a digital address ECDA contained in the received radio signal 50 matches (typically, is identical to) the digital address CBDA of the charging box 40. The control unit 46 is configured to read data indicative of instantaneous consumption of electrical current ICEC on each of the three phases as measured in the electrical cabinet 10, wherein the data is contained in the received and verified radio signal 50. The control unit 46 is configured to provide said data to the charging power unit 42 as input for the power utilization.

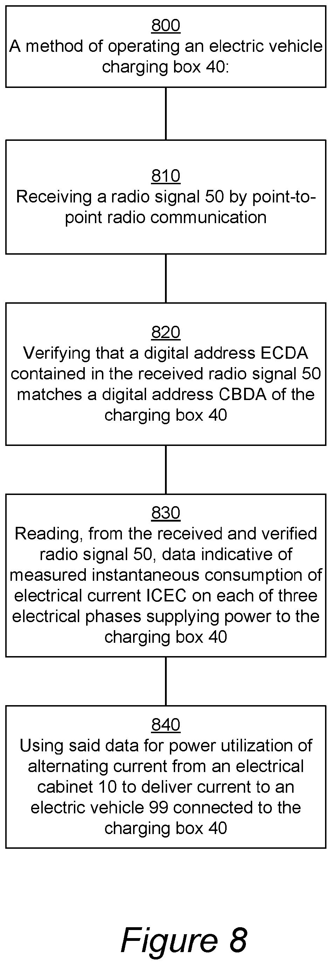

Figure 8 is a schematic flowchart diagram that illustrates a method 800, generally according to the present invention, of operating an electric vehicle charging box 40 as described above in any embodiment or alternative. The method 800 comprises receiving 810 a radio signal 50 by point-to-point radio communication. The method 800 then comprises verifying 820 that a digital address ECDA contained in the received radio signal 50 matches (typically, is identical to) a digital address CBDA of the charging box 40.

The method 800 comprises reading 830, from the received and verified radio signal 50, data indicative of measured instantaneous consumption of electrical current ICEC on each of three electrical phases supplying power to the charging box 40.

The method 800 finally comprises using said data for power utilization 840 of alternating current from an electrical cabinet 10 to deliver current to an electric vehicle 99 connected to the charging box 40.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A system (1) for charging electric vehicles, the system comprising:
an electrical cabinet (10) for receiving three-phase alternating current from a power grid (20) and distributing alternating current to electrically powered devices (32) in or at a building (30); and
an electric vehicle charging box (40), powered by alternating current from the electrical cabinet,
wherein the electrical cabinet (10) comprises:
a sensing unit (12) for measuring instantaneous consumption of electrical current (ICEC) by said electrically powered devices (32) on each of the three phases;
a point-to-point radio communication transceiver (14); and
a control unit (16) operatively associated with the point-to-point radio communication transceiver (14) and the sensing unit (12), the control unit (16) having access to a digital address (ECDA) of the electrical cabinet and being configured to cause the point-to-point radio communication transceiver (14) to send a radio signal (50) containing said digital address (ECDA) and data indicative of the measured instantaneous consumption of electrical current (ICEC) on each of the three phases, and
wherein the charging box (40) comprises:
a charging power unit (42) configured for power utilization of alternating current from the electrical cabinet (10) to deliver current to an electric vehicle (99) connected to the charging box (40);
a point-to-point radio communication transceiver (44) for receiving the radio signal (50) transmitted from the electrical cabinet (10); and
a control unit (46) operatively associated with the point-to-point radio communication transceiver (44) and the charging power unit (42), the control unit (46) having access to a digital address (CBDA) of the charging box (40) and being configured to:
verify that the digital address (ECDA) contained in the received radio signal (50) matches the digital address (CBDA) of the charging box (40);
read the data indicative of the measured instantaneous consumption of electrical current (ICEC) on each of the three phases as contained in the received and verified radio signal (50); and
provide said data to the charging power unit (42) as input for the power utilization.

2. The system according to claim 1, wherein the point-to-point radio communication transceiver (14) the electrical cabinet (10) and the point-to-point radio communication transceiver (44) in the charging box (40) allow communication of the radio signal (50) from the electrical cabinet (10) to the charging box (40) without requiring any intermediate local or global data communication network entities.

3. The system according to claim 1 or 2,
each of the electrical cabinet (10) and the charging box (40) comprising a communication interface (13, 43),
each of the electrical cabinet and the charging box having a set-up mode in which the communication interfaces (13, 43) are connected (52) to each other,
the control unit (46) of the charging box (40) being configured, in the set-up mode, to notify the digital address (CBDA) of the charging box (40) through the communication interface (43), and
the control unit (16) of the electrical cabinet (10) being configured, in the set-up mode, to receive the digital address (CBDA) of the charging box, as notified by the control unit (46) of the charging box (40), through the communication interface (13) and store the received digital address (CBDA) as the digital address (ECDA) of the electrical cabinet (10) in a memory (15) of the control unit (16).

4. The system according to claim 3, the charging box (40) comprising an address selector (45) for setting the digital address (CBDA) of the charging box (40), wherein the control unit (46) of the charging box (40) is configured, in the set-up mode, to read the digital address (CBDA) of the charging box (40) from the address selector (45) for notification through the communication interface (43).

5. The system according to claim 3 or 4, wherein the electrical cabinet (10) and the charging box (40) are configured to enter the set-up mode during one or more of:
installation,
setting of operational parameters,
maintenance,
updates,
upgrades, and
repair.

6. The system according to any of claims 3-5, wherein the communication interfaces (13, 43) of the electrical cabinet (10) and the charging box (40) comprise respective communication ports for wired communication.

7. The system according to any preceding claim, wherein the charging box (40) comprises a main fuse rating selector (47) for setting a value (MFRV) of a main fuse rating in the building (30) to which the electrical cabinet (10) belongs, wherein the control unit (46) of the charging box (40) is configured to use the main fuse rating value (MFRV) as set on the main fuse rating selector (47) as a parameter for the power utilization.

8. The system according to claim 7, wherein the main fuse rating selector (47) of the charging box (40) comprises a rotary switch or dial being rotatable into any of a plurality of different positions, each position representing a respective main fuse rating value (MFRV).

9. The system according to claim 7, wherein the main fuse rating selector (47) of the charging box (40) comprises a group of dip switches, each being switchable between first and second positions, the positions set for the group of dip switches in combination representing a main fuse rating value (MFRV) among at least two different main fuse rating values.

10. The system according to any preceding claim, the system comprising a plurality of charging boxes (10), each as defined in any preceding claim, wherein at least two of the plurality of charging boxes have the same digital address (CBDA), thereby enabling said at least two charging boxes to utilize the data contained in the radio signal (50) transmitted by the electrical cabinet (10) for common power utilization of the alternating current from the electrical cabinet (10).

11. The system according to any preceding claim, wherein the power utilization by the charging power unit (42) of the charging box (40) involves phase balancing by selecting one or more phases of alternating current from the electrical cabinet (10) for the delivery of current to the electric vehicle (99).

12. The system according to claim 11, wherein said one or more phases is/are selected as the particular one(s) of the phases of alternating current from the electrical cabinet (10) which is/are indicated by said data indicative of the measured instantaneous consumption of electrical current (ICEC) as being subject to the lowest measured instantaneous consumption of electrical current.

13. The system according to claim 11 or 12, wherein the power utilization by the charging power unit (42) of the charging box (40) further involves load balancing by controlling a magnitude of alternating current drawn on the or each selected phase from the electrical cabinet (10) for the delivery of current to the electric vehicle (99).

14. The system according to claim 13, wherein the load balancing involves controlling the magnitude of alternating current drawn on the or each selected phase from the electrical cabinet (10) based on the measured instantaneous consumption of electrical current (ICEC) on each of the phases, as indicated by said data, and an upper current limit value (UCLV).

15. The system according to claim 14 when dependent on any of claims 7-9,
wherein the upper current limit value (UCLV) is equal to or depends on the main fuse rating value (MFRV).

16. The system according to claim 14, wherein the upper current limit value (UCLV) is provided from the electrical cabinet (10) and included in said radio signal (50) or communicated to the charging box (40) in a previous radio signal.

17. The system according to claim 16, wherein the upper current limit value (UCLV) is provided by the power grid (20) to the electrical cabinet (10).

18. The system according to any preceding claim, wherein the sensing unit (12) of the electrical cabinet (10) is one of the following alternatives:
a) a part of an electricity meter (11) of the electrical cabinet (10), being connected to the control unit (16) of the electrical cabinet (10) via a first type of communication link (13, 13', 13"), or
b) a separate current measuring arrangement including a respective current meter (12a, 12b, 12c) for each of the three phases of alternating current in the electrical cabinet (10), the separate current measuring arrangement being connected to the control unit (16) of the electrical cabinet (10) via a second type of communication link (17, 17', 17").

19. The system according to claim 18, the point-to-point radio communication transceivers (14, 44) in the electrical cabinet (10) and the charging box (40) both being capable of bidirectional radio communication,
wherein the control unit (46) of the charging box (40) is configured to cause the point-to-point radio communication transceiver (44) of the charging box (40) to send a control signal comprising information indicating whether the sensing unit (12) of the electrical cabinet (10) is alternative a) or alternative b), and
wherein the control unit (16) of the electrical cabinet (10) is configured to use the information indicated in the control signal, as received by the point-to-point radio communication transceiver (14) of the electrical cabinet (10), to retrieve the measured instantaneous consumption of electrical current (ICEC) on each of the three phases via the first type of communication link (13, 13', 13") according to alternative a) or the second type of communication link (17, 17', 17") according to alternative b), as applicable.

20. The system according to any preceding claim, wherein the charging box (40) is an electric vehicle supply equipment, EVSE.

21. An electric vehicle charging box (40) comprising:
a charging power unit (42) configured for power utilization of alternating current from an electrical cabinet (10) to deliver current to an electric vehicle connected to the charging box;
a point-to-point radio communication transceiver (44) for receiving a radio signal (50) transmitted from the electrical cabinet (10);
a control unit (46) operatively associated with the point-to-point radio communication transceiver (44) and the charging power unit (42), the control unit (46) having access to a digital address (CBDA) of the charging box (40) and being configured to:
verify that a digital address (ECDA) contained in the received radio signal (50) matches the digital address (CBDA) of the charging box (40);
read data indicative of instantaneous consumption of electrical current (ICEC) on each of the three phases as measured in the electrical cabinet (10), the data being contained in the received and verified radio signal (50); and
provide said data to the charging power unit (42) as input for the power utilization.

22. The electric vehicle charging box according to claim 21, further being characterized as the electric vehicle charging box (40) in any of claims 1 to 20.

23. A method (800) of operating an electric vehicle charging box (40), the method comprising:
receiving (810) a radio signal (50) by point-to-point radio communication;
verifying (820) that a digital address (ECDA) contained in the received radio signal (50) matches a digital address (CBDA) of the charging box (40);
reading (830), from the received and verified radio signal (50), data indicative of measured instantaneous consumption of electrical current (ICEC) on each of three electrical phases supplying power to the charging box (40); and
using said data for power utilization (840) of alternating current from an electrical cabinet (10) to deliver current to an electric vehicle (99) connected to the charging box (40).

24. The method of operating an electric vehicle charging box (40) according to claim 23, further comprises any of the functionality defined above for the electric vehicle charging box (40) in any of claims 1 to 19.
